# EUROPÄISCHE PATENTSCHRIFT

(11) **EP 1 588 150 B1**
(45) Veröffentlichungstag und Bekanntmachung des Hinweises auf die Patenterteilung: **18.11.2009**
(21) Anmeldenummer: 03782147.7
(22) Anmeldetag: 09.12.2003
(51) Int. Cl.: G01N 21/35, G01J 3/10, H01K 1/32

(54) **INFRAROTQUELLE UND GASSENSOR**
INFRA-RED SOURCE AND GAS SENSOR
SOURCE DE RAYONNEMENT INFRAROUGE ET CAPTEUR DE GAZ

(30) Priorität: 22.01.2003 DE 10302165
(43) Veröffentlichungstag der Anmeldung: 26.10.2005
(73) Patentinhaber: ROBERT BOSCH GMBH, 70442 Stuttgart (DE)
(72) Erfinder: ARNDT, Michael, 72762 Reutlingen (DE)
(86) Internationale Anmeldenummer: PCT/DE2003/004040
(87) Internationale Veröffentlichungsnummer: WO 2004/068120

(56) Entgegenhaltungen:
- WO-A-00/04351
- US-A- 3 211 961
- US-A- 3 331 941

## Beschreibung

### Stand der Technik

Die Erfindung geht aus von einer Infrarotquelle und einem Gassensor nach der Gattung der nebengeordneten Ansprüche. Es sind bereits Vorrichtungen zur Detektion von Strahlungssignalen bekannt, die beispielsweise zur Bestimmung der Gaskonzentration mittels Infrarotabsorption dienen. Störende Gase in einem Gasvolumen, beispielsweise im Innenraum eines Kraftfahrzeuges, sind beispielsweise CO₂, CO, H₂O oder auch CH₄, wobei das Kohlendioxid CO₂ insbesondere aus der Atemluft von in dem Gasvolumen befindlichen Personen bzw. auch aus CO₂-Klimaanlagen stammen kann. Solche störenden Gase werden gemäß allgemein bekannten Gasdetektoren detektiert. Solche Sensoren für die Selektion von Gasen, die auf dem Prinzip der Strahlungsabsorption im Messgas basieren, bestehen üblicherweise aus einer Strahlungsquelle und einem oder mehreren wellenlängenspezifischen Strahlungsdetektoren. Für Sensoren, die die Absorption im mittleren Infrarotbereich, beispielsweise im Bereich von Wellenlängen von 3 µm bis 25 µm messen, wie beispielsweise Sensoren zur Detektion von Kohlenstoffdioxid CO₂, werden üblicherweise thermische Strahler als Quelle verwendet. Hier gibt es beispielsweise als Infrarotquellen Strahler in Form von Glühlampen oder in Form von mikrostrukturierten Anordnungen, die als thermische Strahler fungieren. Die wellenlängenspezifischen Strahlungsdetektoren bestehen aus einer Filtereinheit, die die zu messende Wellenlänge transmittiert und einem breitbandigen Infrarotdetektor. Als Filter kommen hier beispielsweise Interferenzfilter zum Einsatz. Einfache Interferenzfilter haben die Eigenschaft, auch harmonische der gewünschten Wellenlänge zu transmittieren. Dies kann zum einen durch einen komplizierteren und damit auch einem kostenintensiveren Aufbau des Interferenzfilters behoben werden, oder aber durch dem Einsatz eines einfachen Breitbandfilters vor den eigentlichen Detektor. Wird ein solches Breitbandfilter verwendet, so bedingt dies einen aufwändigen Aufbau des Detektors, da dann zwei Filter montiert werden müssen.

Die US 3,211,961 A beschreibt einen Gassensor mit einer Infrarotquelle, einem Infrarot-Detektor und einem vor dem Detektor angeordneten Filtersystem bestehend aus einem Interferenzfilter und einem Langpaßfilter, der Wellenlängen kleiner als 2 µm wegfiltert.

Die WO 00/04351 A offenbart eine Infrarotquelle für Gassensoren, die in einen Kolben aus infrarot-durchlässigem Glas eingekapselt ist.

Die US 3,331,941 A beschreibt eine Infrarotquelle mit einer in einem Gehäuse angebrachten Heizspirale, wobei das Gehäuse auf der Austrittsseite der Strahlung ein Quartzfenster mit einer ersten Transmissionscharakteristik aufweist, das mit einem Schichtsystem aus alternierenden Germanium- und Kryolith-Schichten mit einer zweiten Transmissionscharakteristik beschichtet ist. Die Kombination dieser beiden Transmissionscharakteristiken führt zu einer Bandpaßfiltercharakteristik in einem Betriebsfrequenzbereich von 2.85-3.8 µm. Diese Infrarotquelle wird in einer Vorrichtung zur Umformung thermoplastischer Folien eingesetzt.

### Vorteile der Erfindung

Die erfindungsgemäße Infrarotquelle und der Gassensor mit den Merkmalen der nebengeordneten Ansprüche haben dem gegenüber den Vorteil, dass kein zusätzlicher Montageaufwand bei der Fertigung des Sensors notwendig ist und trotzdem ein breitbandiges Filter zwischen der Infrarotquelle und dem Infrarotdetektor vorgesehen ist. Es ist damit vorteilhaft möglich, dass die von der Infrarotquelle ausgehende Strahlung nur im Bereich eines Betriebsfrequenzbereichs abgestrahlt wird und so auch die Dissipation der Energie in anderen Bereichen des Gassensors verringert wird. Hierdurch ist es möglich, dass die Hauptwärmeentwicklung nur bei der Infrarotquelle liegt. Die Wärmeentwicklung kann dabei von der Detektorseite entfernt werden. Weiterhin ist es dadurch erfindungsgemäß möglich, dass nur Strahlung in dem engen Betriebsfrequenzbereich um die Wellenlänge des Interferenzfilters herum überhaupt in Richtung des Detektors gelangt.

Durch die in den Unteransprüchen aufgeführten Maßnahmen sind vorteilhafte Weiterbildungen und Verbesserungen der in den nebengeordneten Ansprüchen angegebenen Infrarotquelle und des Gassensors möglich. Besonders vorteilhaft ist, dass die erste Transmissionscharakteristik bezüglich des Betriebsfrequenzbereichs für kleinere Wellenlängen eine höhere Transmission vorsieht und dass die zweite Transmissionscharakteristik bezüglich des Betriebsfrequenzbereichs für größere Wellenlängen eine höhere Transmission vorsieht. Dadurch ist es möglich, auf einfache Weise eine Bandpassfiltercharakteristik für einen Betriebsfrequenzbereich zu bewirken. Weiterhin ist von Vorteil, dass als erste Schicht Glas vorgesehen ist und dass als zweite Schicht Silizium oder Germanium vorgesehen ist. Dabei ist es möglich, die erfindungsgemäße Bandpasscharakteristik mit einfachen Methoden und Materialien vorzusehen, wobei für den Fall der Glasschicht das Material bei einer herkömmlichen Infrarotquelle, bereits vorhanden ist.

### Zeichnungen

Ausführungsbeispiele der Erfindung sind in den Zeichnungen dargestellt und in der nachfolgenden Beschreibung näher erläutert. Es zeigen
Figur 1 eine herkömmliche Infrarotquelle in Glühlampenform,
Figur 2 eine herkömmliche Infrarotquelle in Form eines mikromechanischen Infrarotstrahlers,
Figur 3 die Transmissionskurve eines üblichen Interferenzfilters,
Figur 4 die Filtertransmissionskurve und die Transmissionscharakteristik der von einer erfindungsgemäßen Infrarotquelle abgestrahlten Strahlung,
Figur 5 eine erfindungsgemäße Infrarotquelle,
Figur 6 die Transmissionscharakteristik einer ersten Schicht,
Figur 7 die Transmissionscharakteristik einer zweiten Schicht,
Figur 8 die Kombination der Transmissionscharakteristik mit einer Filtertransmissionskurve und
Figur 9 den prinzipiellen Aufbau eines erfindungsgemäßen Gassensors.

### Beschreibung der Ausführungsbeispiele

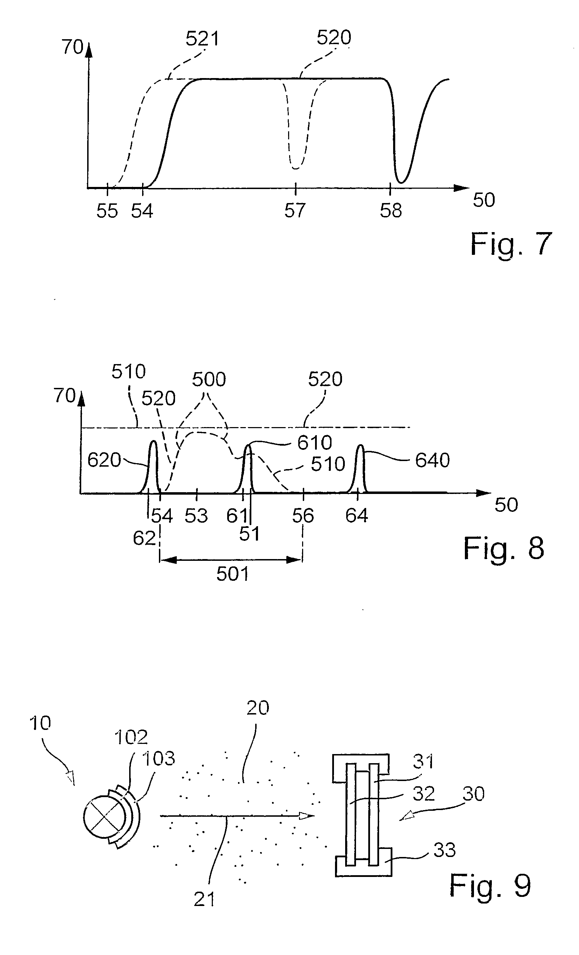

In Figur 9 ist der prinzipielle Aufbau eines erfindungsgemäßen Gassensors dargestellt. Ausgehend von einer mit dem Bezugszeichen 10 bezeichneten Infrarotquelle, die eine erste Schicht 102 und eine zweite Schicht 103 trägt, wird eine mit dem Bezugszeichen 21 und einem Pfeil bezeichnete Infrarotstrahlung in Richtung auf einen Detektor 30 hin ausgesandt. Im Bereich zwischen der Infrarotquelle 10 und dem Detektor 30 ist ein Gas vorhanden, welches mit dem Bezugszeichen 20 versehen ist. Das Gas umfasst Gasanteile, deren Konzentration mit dem Gassensor zu messen sind. Als ein solcher Gasanteil kommt beispielsweise Kohlenstoffdioxid CO₂ in Frage. Die Detektorvorrichtung 30 umfasst einen Infrarotdetektor 31 und ein Filter 32, welche beide durch eine Halterung 33 relativ zueinander fixiert sind. Das Filter 32 lässt erfindungsgemäß lediglich eine solche Wellenlänge durch, welche der Absorptionswellenlänge des im Gas 20 zu detektierenden Messgases, beispielsweise CO₂, entspricht. Aus dem Grad der Abschwächung der von der Infrarotquelle, ausgehenden Infrarotstrahlung 21 für die Messwellenlängen bzw. die Detektionswellenlänge kann die Gaskonzentration des zu messenden Gases, beispielsweise CO₂, im Gas 20 abgeleitet werden. Hierzu ist es erfindungsgemäß sinnvoll, dass neben einer in Figur 9 dargestellten Anordnung eines Gassensors gleichzeitig noch eine Referenzanordnung vorgesehen ist, bei der vor einem ähnlichen Infrarotdetektor ein Filter angeordnet ist, welches für einen größeren Wellenlängenbereich durchlässig ist, so dass hierdurch eine Referenzmessung durchführbar ist.

Bei dem in Figur 9 dargestellten Gassensor ist das Filter 32 insbesondere als Interferenzfilter vorgesehen. Beispielhaft ist das Filter 32 als Fabry-Perot-Filter vorgesehen. Solche Filter haben die Eigenschaft, dass neben der gewünschten Durchlassfrequenz bzw. gewünschten Durchlasswellenlänge noch weitere Durchlassfrequenzen bzw. Durchlasswellenlängen auftreten. Die gewünschte Durchlassfrequenz entspricht hierbei der Absorptionsfrequenz des Stoffes in dem Gas 20, dessen Konzentration zu messen ist. Die weiteren Duchlassfrequenzen bzw. Durchlasswellenlängen des Filter 32 sind insbesondere die harmonischen der gewünschten Durchlasswellenlänge. Erfindungsgemäß wird mit einfachen Mitteln verhindert, dass nicht gewünschte Durchlassfrequenzen des Filters 32 in den Bereich des Infrarotdetektors 31 gelangen. Hierzu ist es erfindungsgemäß vorgesehen, nennenswerte Anteile der Infrarotstrahlung 21 bei diesen nicht gewünschten Durchlassfrequenzen bereits kurz nach ihrer Entstehung, d.h. bei der Quelle 10, an ihrer weiteren Ausbreitung Richtung dem Filter 32 bzw. des Infrarotdetektors 31 zu behindern. Eine Anordnung, bei der eine solche Ausfilterung von ungewünschten Durchlassfrequenzen direkt vor oder nach dem Filter 32 erfolgt, wird dabei erfindungsgemäß vermieden, weil dies mit hohen Kosten und großem Aufwand hinsichtlich des Aufbaus des Detektors 30 verbunden ist. Erfindungsgemäß wird daher die Infrarotquelle 10 so verändert, dass nur Infrarotstrahlung 21 in einem engen Bereich um die gewünschte Durchlassfrequenz bzw. Durchlasswellenlänge des Interferenzfilters 32 austreten kann.

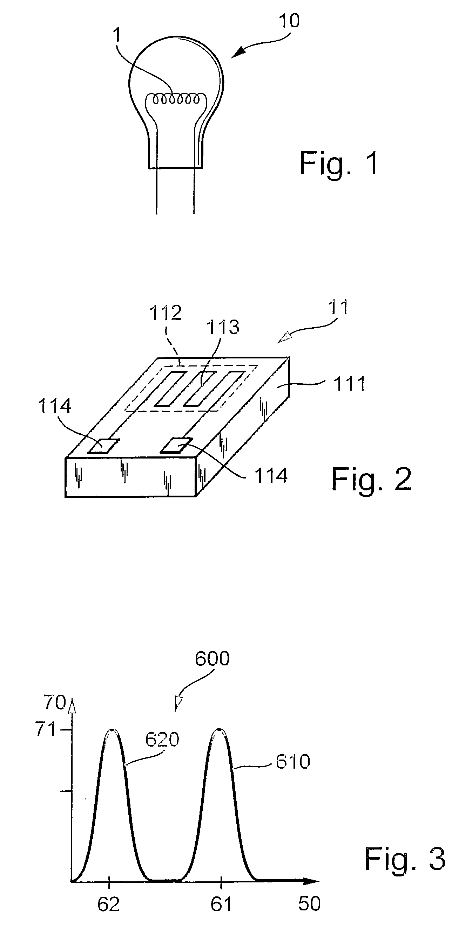

In Figur 1 ist eine herkömmliche Infrarotquelle 10 für einen Infrarotstrahler in Glühlampenform dargestellt. Hierbei erzeugt eine Glühwendel 1, die auf eine entsprechende Temperatur geheizt ist, eine Strahlung, die auch Infrarotanteile umfasst. Die Glühwendel wird gemäß dem Stand der Technik mit einem umgebenden Glaskörper versehen.

In Figur 2 ist eine herkömmliche Infrarotquelle 11 in Form eines mikromechanischen Infrarotstrahlers dargestellt. Die mikromechanische Infrarotquelle 11 umfasst ein Substrat 111, auf dem insbesondere eine Membran bzw. ein Membranbereich 112 und im Membranbereich 112 eine Heizstruktur 113 vorgesehen ist. Die auch als Heizeinrichtung 113 bezeichnete Heizstruktur 113 ist mittels mit dem Bezugszeichen 114 versehenen Anschlussflächen und nicht eigens mit einem Bezugszeichen versehenen Verbindungsleitungen von außerhalb der mikromechanischen Infrarotquelle 11 (elektrisch) zugänglich bzw. steuerbar. Die Heizeinrichtung 113 wird, ähnlich wie die Heizwendel 1 bei der herkömmlichen Infrarotquelle gemäß Figur 1, durch einen elektrischen Strom, der durch sie fließt, aufgeheizt und erzeugt dadurch die Strahlung, welche auch Infrarotanteile aufweist.

In Figur 3 ist die Transmissionskurve eines üblichen Interferenzfilters dargestellt. Auf der mit dem Bezugszeichen 50 bezeichneten Abszisse ist die Wellenlänge dargestellt und auf der mit dem Bezugszeichen 70 versehenen Ordinate ist der Transmissionsgrad in % angegeben. Eine erster Transmissionsgrad von 100 %, der mit dem Bezugszeichen 71 angegeben ist, wird nur bei ausgezeichneten Wellenlängen erreicht. Die Transmissionskurve 600 weist bei solchen ausgezeichneten Wellenlängen Maxima auf. Sie zerfällt damit in eine Anzahl von um bestimmte Wellenlängen herum zentrierte Transmissionsteilkurven, wovon in Figur 3 lediglich zwei dargestellt sind, eine erste Filtertransmissionsteilkurve 610 und eine zweite Filtertransmissionsteilkurve 620. Die erste Filtertransmissionsteilkurve 610 ist um die erste Durchgangswellenlänge des Filters, welche der elften Wellenlänge 61 entspricht, herum zentriert. Die zweite Filtertransmissionteilkurve 620 ist um eine zwölfte Wellenlänge, welche mit dem Bezugszeichen 62 versehen ist, herum zentriert. Die elfte und zwölfte Wellenlänge 61, 62 ergeben sich aus dem doppelten der optischen Dicke des Materials des Interferenzfilters, geteilt durch eine ganzzahlige Zahl, wobei die ganzzahlige Zahl die Werte 1,2 usw. annehmen kann.

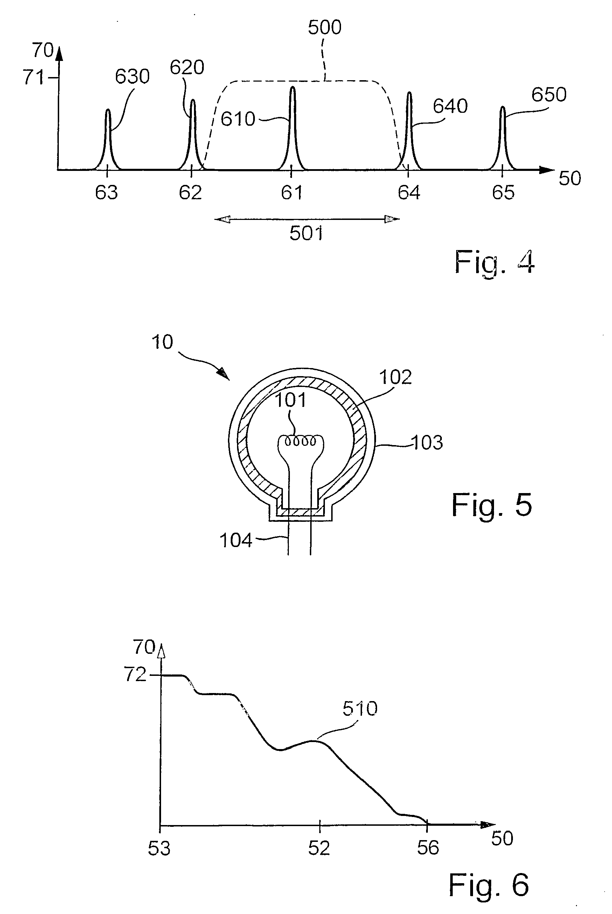

In Figur 4 ist die Filtertransmissionskurve und die Transmissionscharakteristik der von einer erfindungsgemäßen Infrarotquelle 10 abgestrahlten Strahlung dargestellt. Auf der mit dem Bezugszeichen 50 versehenen Abszisse ist wiederum die Wellenlänge aufgetragen und auf der mit dem Bezugszeichen 70 versehenen Ordinate ist der Grad der Transmission in % angegeben. Die Charakteristik der von einer erfindungsgemäßen Quelle abgestrahlten Strahlung ist mit dem Bezugszeichen 500 und einer gestrichelten Linie bezeichnet. Diese nimmt nennenswerte Werte lediglich in einem Bereich an, der nur ein Maximum der Filtertransmissionskurve umfasst. Die gesamte Filtertransmissionskurve ist in Figur 4 anhand mehrerer Filtertransmissionsteilkurven zu der elften Wellenlänge 61, zu der zwölften Wellenlänge 62, zu einer dreizehnten Wellenlänge 63, zu einer vierzehnten Wellenlänge 64 und zu einer fünfzehnten Wellenlänge 65 dargestellt. Die gesamte Filtertransmissionskurve 600, wobei das Bezugszeichen 600 in Figur 4 nicht dargestellt ist, umfasst die erste Filtertransmissionsteilkurve 610 zur elften Wellenlänge 61, die zweite Filtertransmissionsteilkurve 620 zur zwölften Wellenlänge 62, eine dritte Filtertransmissionsteilkurve 630 zur dreizehnten Wellenlänge 63, eine vierte Filtertransmissionsteilkurve 640 zur vierzehnten Wellenlänge 64 und eine fünfte Filtertransmissionsteilkurve 650 zur fünfzehnten Wellenlänge 65. Wiederum ist das Maximum der Transmission von 100 % mit dem ersten Transmissionsgrad 71 bezeichnet. In Figur 4 ist die elften Wellenlänge 61 etwa im mittleren Bereich der dargestellten Abszisse 50, d.h. der Achse der Wellenlängen, aufgetragen. Rechts und links hiervon, d.h. in Richtung der größeren Wellenlängen und in Richtung der kleineren Wellenlängen sind die nächsten Maxima der Filtertransmissionskurve 600 bei der zwölften Wellenlänge 62 bzw. bei der vierzehnten Wellenlänge 64. Um die elfte Wellenlänge 61 herum ist die Charakteristik 500 der von der erfindungsgemäßen Infrarotquelle 10 abgestrahlten Strahlung dargestellt, wobei im unteren Bereich der Figur 4 der mit einem Doppelpfeil und dem Bezugszeichen 501 versehene Bereich der Betriebsfrequenzen bzw. der Betriebswellenlängen etwa mit dem Bereich nennenswerter Werte der Charakteristik 500 der von der erfindungsgemäßen Infrarotquelle 10 abgestrahlten Strahlung übereinstimmt.

In Figur 5 ist eine erfindungsgemäße Infrarotquelle 10 dargestellt. Hierbei wird die erfindungsgemäße Infrarotquelle 10 als Glühlampe mit einer Glühwendel 101 und Anschlussdrähten 104 vorgesehen. Um die Glühwendel 101 herum ist ein Lampenglaskörper 102 aus Glas vorgesehen, der als erste Schicht 102 dient. Eine auf diesem Lampenglaskörper 102 aufgebrachte weitere Absorptionsschicht 103 wird als zweite Schicht bezeichnet. Hierbei wird zum einen die Absorptionscharakteristik des Lampenglases 102 und zum anderen die Absorptionscharakteristik der zusätzlich aufgebrachten Beschichtung 103 des Lampenglases 102 genutzt. Der Vorteil dieses Aufbaus liegt in der Nutzung des Lampenglaskörpers 102 als Teil des Absorptionsfilters, nämlich als erste Schicht 102 und weiterhin als Träger für eine weitere Absorptionsfilterschicht 103, d.h. der zweiten Schicht 103. Für den Einsatz in einem CO₂-Sensor, der beispielsweise auf Basis einer Absorptionsmessung bei einer Wellenlänge von 4,3 µm arbeitet, wird typischerweise ein Lampenglas eingesetzt, das eine Transmission bis zu einer Wellenlänge von ca. 5 µm zeigt. Diese Absorptionscharakteristik bewirkt, dass die langwelligeren Hannonischen des Interferenzfilters 32 am Detektor 30 nicht mehr ins Gewicht fallen, weil diese von der ersten Schicht 102, d.h. von dem Lampenglaskörper 102, absorbiert werden. Somit müssen die kurzwelligeren Anteile des von der Wendel 101 abgestrahlten Lichtes herausgefiltert werden, um zu einer, wie in Figur 4 dargestellt, bandbegrenzten Transmissionscharakteristik 500 der Kombination der ersten und zweiten Schicht 102, 103 zu gelangen. Hierfür eignen sich z.B. Haltleitermaterialien wie Silizium oder Germanium, die als zweite Schicht 103 auf die Oberfläche der ersten Schicht 102, d.h. auf die Oberfläche des Glaskörpers 102 der Glühlampe aufgedampft werden können. Außer Halbleitermaterialien können aber auch z.B. Metallschichten oder organische Absorptionsschichten auf die Oberfläche der ersten Schicht 102 aufgebracht werden.

In Figur 6 ist die Transmissionscharakteristik 510 der ersten Schicht 102 dargestellt. In einem Diagramm, dessen Abszisse 50 eine Wellenlängenskala darstellt und dessen Ordinate 70 den Grad an Transmission der ersten Schicht 102 darstellt, ist die Transmissionscharakteristik 510 der ersten Schicht 102 als sog. erste Transmissionscharakteristik 510 dargestellt. Bei einer dritten Wellenlänge 53, die beispielsweise bei 2,5 µm liegt, ergibt sich eine zweite Transmissionsrate 72 von etwa 90 %. Die Transmission 70 fällt zu größeren Wellenlängen hin ab, wobei sich bei einer zweiten Wellenlänge 52 von etwa 4 µm ein lokales Maximum der Transmissionscharakteristik von etwa 60% Transmission ergibt und wobei zu größeren Wellenlängen hin ein relativ starker Abfall der Transmission zu beobachten ist, wobei bei einer sechsten Wellenlänge 56 von ca. 5 µm die Transmission annähernd 0 ist. Die Transmission bleibt für größere Wellenlängen als die sechste Wellenlänge 56 nahe 0 % und verbleibt für kleinere Wellenlängen als die dritte Wellenlänge 53 etwa auf dem Niveau der zweiten Transmissionsrate 72 von ca. 90 %.

In Figur 7 ist die Transmissionscharakteristik 520 bzw. 521 der zweiten Schicht 103 dargestellt. Wiederum ist ein Diagramm gewählt, dessen Abszisse 50 eine Wellenlängenskala darstellt und dessen Ordinate 70 eine Skala der Transmissionsrate darstellt. In Figur 7 sind zwei Transmissionscharakteristiken dargestellt, wobei beide Transmissionscharakteristiken als sog. zweite Transmissionscharakteristik bezeichnet werden. Die mit dem Bezugszeichen 520 bezeichnete zweite Transmissionscharakteristik entspricht der Transmissionscharakteristik einer zweiten Schicht 103 in Form einer Germanium-Schicht und die mit dem Bezugszeichen 521 versehene zweite Transmissionscharakteristik zeigt die Transmissionscharakteristik für den Fall, dass die zweite Schicht 103 als Siliziumschicht vorgesehen ist. Die Form der zweiten Transmissionscharakteristik 520, 521 ist jedoch in beiden Fällen ähnlich:
Von einer bestimmten Wellenlänge an steigt die Transmissionsrate von etwa 0 auf einen Maximalwert von 90% oder 100 % und verbleibt im Wesentlichen auf diesem hohen Transmissionsniveau bis zu einer größeren Wellenlänge, bei der ein starkes Absinken der Transmissionsrate zu beobachten ist. Für die mit dem Bezugszeichen 520 bezeichnete zweite Transmissionscharakteristik (für Germanium) steigt die Transmission ab einer vierten Wellenlänge 54 von ca. 1,7 µm stark an, um erst wieder bei Wellenlängen ab einer achten Wellenlänge 58 von über 20 µm abzufallen. Bei der mit dem Bezugszeichen 521 bezeichneten zweite Transmissionscharakteristik (für Silizium) beginnt die Transmission bereits bei einer fünften Wellenlängen 55 von deutlich unter 1,7 µm deutlich anzusteigen, um auf einem hohen Transmissionsniveau zu verbleiben, bis die Transmission bei einer siebten Wellenlänge 57 bei ca. 10 µm wieder geringere Werte annimmt.

In Figur 8 ist in einem weiteren Diagramm die Kombination der ersten und zweiten Transmissionscharakteristik zusammen mit einer Filtertransmissionskurve des Interferenzfilters dargestellt. In dem Diagramm bildet wiederum die Abszisse 50 eine Wellenlängenskala und die Ordinate 70 eine Skala der Transmissionsrate. Die erste Transmissionscharakteristik 510 ist in Figur 8 mittels einer gestrichpunkteten Linie dargestellt, sie entspricht der in Figur 6 dargestellten Transmissionscharakteristik für Glas, wobei unterhalb der dritten Wellenlänge 53, d.h. für Wellenlängen kleiner als die dritte Wellenlänge 53, das Transmissionsniveau sehr hoch ist, wobei zwischen der dritten Wellenlänge 53 und der sechsten Wellenlänge 56 ein Abfall der Transmission bis nahe 0 der ersten Transmissionscharakteristik 510 dargestellt ist. Die zweite Transmissionscharakteristik 520 ist mit einer gestrichelten Linie in Figur 8 dargestellt und steigt oberhalb der vierten Wellenlänge 54, d.h. für größere Wellenlängen als die vierte Wellenlänge, stark an, um dann bis oberhalb von Werten der sechsten Wellenlänge 56 auf diesem hohen Transmissionsniveau zu verharren. Eine Überlagerung der beiden Transmissionscharakteristiken ergibt die erfindungsgemäße Bandfiltercharakteristik, die in Figur 8 mit dem Bezugszeichen 500 bezeichnet ist und die die beiden abfallenden bzw. ansteigenden Äste der ersten und zweiten Transmissionscharakteristik 510, 520 umfasst. Eine solche Bandpassfiltercharakteristik 500 ergibt sich durch die in Figur 5 dargestellte Überlagerung der ersten Schicht 102 und der zweiten Schicht 103 um die Infrarotquelle 10. Die Überlagerung in Figur 8 der Bandpassfiltercharakteristik 500 mit der Filtertransmissionskurve 600 des Interferenzfilters 32 zeigt, dass der

Betriebsfrequenzbereich, der in Figur 8 mit dem Bezugszeichen 501 und einem Doppelpfeil angegeben ist, lediglich eine einzige Durchlassfrequenz des Interferenzfilters 32 umfasst. Diese Durchlassfrequenz entspricht der elften Wellenlänge 61, um die herum die erste Filtertransmissionsteilkurve 610 angeordnet ist. Die weiteren bzw. benachbarten, bei der zwölften und vierzehnten Wellenlänge 62, 64 befindlichen Filtertransmissionsteilkurven 620, 640 liegen außerhalb des Betriebsfrequenzbereichs 501.

## Patentansprüche

1. Infrarotquelle (10) für Gassensoren mit einer ersten Schicht (102) und einer zweiten Schicht (103), wobei die erste Schicht (102) eine erste Transmissionscharakteristik (510) aufweist und wobei die zweite Schicht (103) eine zweite Transmissionscharakteristik (520) aufweist, wobei die Kombination der ersten und zweiten Transmissionscharakteristik (510, 520) eine Bandpassfiltercharakteristik (500) für einen Betriebsfrequenzbereich (501) bewirken,
wobei es sich bei der ersten Schicht um einen Lampenglaskörper der als Glühlampe ausgebildeten Infrarotquelle handelt und bei der zweiten Schicht um eine auf dem Lampenglaskörper aufgebrachte Absorptionsschicht handelt.

2. Infrarotquelle (10) nach Anspruch 1, **dadurch gekennzeichnet, dass** die erste Transmissionscharakteristik (510) bezüglich des Betriebsfrequenzbereichs (501) für kleinere Wellenlängen eine höhere Transmission vorsieht und dass die zweite Transmissionscharakteristik bezüglich des Betriebsfrequenzbereichs (501) für größere Wellenlängen eine höhere Transmission vorsieht.

3. Infrarotquelle (10) nach einem der vorhergehenden Ansprüche, **dadurch gekennzeichnet, dass** als erste Schicht (102) Glas vorgesehen ist und dass als zweite Schicht (103) Silizium oder Germanium vorgesehen ist.

4. Gassensor mit einer Infrarotquelle (10) und einem Detektor (31), wobei zwischen der Infrarotquelle (10) und dem Detektor (31) ein Interferenzfilter (32) vorgesehen ist, **dadurch gekennzeichnet, dass** als Infrarotquelle (10) eine Infrarotquelle (10) nach einem der vorhergehenden Ansprüche vorgesehen ist.

5. Gassensor nach Anspruch 4, **dadurch gekennzeichnet, dass** der Betriebsfrequenzbereich (501) der Infrarotquelle (10) genau eine Durchlassfrequenz (61) des Interferenzfilters (32) umfasst.

6. Gassensor nach Anspruch 4 oder 5, **dadurch gekennzeichnet, dass** als Interferenzfilter (32) ein Fabry-Perot-Filter vorgesehen ist.

## Claims

1. Infrared source (10) for gas sensors comprising a first layer (102) and a second layer (103), wherein the first layer (102) has a first transmission characteristic (510), and wherein the second layer (103) has a second transmission characteristic (520), wherein the combination of the first and second transmission characteristics (510, 520) brings about a bandpass filter characteristic (500) for an operating frequency range (501),
wherein the first layer is a lamp glass body of the infrared source embodied as an incandescent lamp, and the second layer is an absorption layer applied on the lamp glass body.

2. Infrared source (10) according to Claim 1, **characterized in that** the first transmission characteristic (510) provides a higher transmission for smaller wavelengths with respect to the operating frequency range (501), and **in that** the second transmission characteristic provides a higher transmission for larger wavelengths with respect to the operating frequency range (501).

3. Infrared source (10) according to any of the preceding claims, **characterized in that** glass is provided as the first layer (102), and **in that** silicon or germanium is provided as a second layer (103).

4. Gas sensor comprising an infrared source (10) and a detector (31), wherein an interference filter (32) is provided between the infrared source (10) and the detector (31), **characterized in that** an infrared source (10) according to any of the preceding claims is provided as the infrared source (10).

5. Gas sensor according to Claim 4, **characterized in that** the operating frequency range (501) of the infrared source (10) comprises precisely one pass frequency (61) of the interference filter (32).

6. Gas sensor according to Claim 4 or 5, **characterized in that** a Fabry-Perot filter is provided as the interference filter (32).

## Revendications

1. Source (10) d'infrarouge pour détecteurs de gaz, qui présente une première couche (102) et une deuxième couche (103), la première couche (102) présentant une première caractéristique de transmission (510) et la deuxième couche (103) une deuxième caractéristique de transmission (520),
la combinaison de la première et de la deuxième caractéristique de transmission (510, 520) ayant pour effet une caractéristique de filtrage passe-bande (500) d'une plage (501) de fréquences de fonctionnement,
la première couche étant un corps de lampe en verre de la source d'infrarouge configurée comme lampe à incandescence et la deuxième couche une couche d'absorption appliquée sur le corps de lampe en verre.

2. Source (10) d'infrarouge selon la revendication 1, **caractérisée en ce que** la première caractéristique de transmission (510) prévoit une transmission plus élevée des petites longueurs d'onde de la plage (501) de fréquences de fonctionnement et **en ce que** la deuxième caractéristique de transmission prévoit une transmission plus élevée des grandes longueurs d'onde de la plage (501) de fréquences de fonctionnement.

3. Source (10) d'infrarouge selon l'une des revendications précédentes, **caractérisée en ce que** du verre est prévu comme première couche (102) et que du silicium ou du germanium sont prévus comme deuxième couche (103).

4. Détecteur de gaz doté d'une source (10) d'infrarouge et d'un détecteur (31), un filtre (32) à interférences étant prévu entre la source (10) d'infrarouge et le détecteur (31),
**caractérisé en ce que**
il présente comme source (10) d'infrarouge une source (10) d'infrarouge selon l'une des revendications précédentes.

5. Détecteur de gaz selon la revendication 4, **caractérisé en ce que** la plage (501) de fréquences de fonctionnement de la source (10) d'infrarouge comprend exactement une fréquence de passage (61) du filtre (32) à interférences.

6. Détecteur de gaz selon les revendications 4 ou 5, **caractérisé en ce qu'**un filtre de Fabry-Perot est prévu comme filtre (32) à interférences.
